# EUROPÄISCHE PATENTSCHRIFT

(11) **EP 1 403 659 B1**
(45) Veröffentlichungstag und Bekanntmachung des Hinweises auf die Patenterteilung: **23.03.2011**
(21) Anmeldenummer: 03017438.7
(22) Anmeldetag: 01.08.2003
(51) Int. Cl.: G01S 13/93, B60Q 1/48

(54) **Einparkhilfe mit grafischer und akustischer Anzeige**
Parking aid with graphic and acoustic notification
Assistance de stationnement à l'aide de notifications graphiques et acoustiques

(30) Priorität: 28.09.2002 DE 10245421
(43) Veröffentlichungstag der Anmeldung: 31.03.2004
(73) Patentinhaber: Valeo Schalter und Sensoren GmbH, 74321 Bietigheim-Bissingen (DE)
(72) Erfinder: Gotzig, Heinrich, Dr., 74081 Heilbronn (DE); Jecker, Nicolas, 73728 Esslingen (DE); Lill, Anton, 74348 Lauffen (DE); Wirkner, Klaus, 74321 Bietigheim-Bissingen (DE)
(74) Vertreter: Pothmann, Karsten

(56) Entgegenhaltungen:
- EP-A- 1 065 642
- DE-A- 3 813 083
- DE-A- 19 616 447
- DE-B- 2 901 504
- FR-A- 2 822 547
- GB-A- 2 319 420
- US-A- 5 598 164

## Beschreibung

Die Erfindung betrifft ein System zum Vermessen einer Parklücke für ein Kraftfahrzeug, insbesondere einen Personenkraftwagen, beim Vorbeifahren des Fahrzeuges längs einer Parklücke. Derartige Systeme werden beispielsweise in Zusammenhang mit einem Parkhilfesystem mit Sensoren vorgesehen, um dem Fahrer die Größe einer Parklücke anzuzeigen, das heißt, ob das Fahrzeug mit der gegebenen Länge ausreichend Platz in der Parklücke findet.

Insbesondere beim Parken von Fahrzeugen im zunehmend starken Stadtverkehr besteht das Problem, dass der Fahrer relativ schnell eine Entscheidung darüber treffen muss, ob er ein Parken in einer gegebenen Parklücke versuchen soll oder nicht. Eine schnelle Entscheidung hierüber ist erforderlich, um so wenig wie möglich den fließenden Verkehr von anderen Fahrzeugen zu behindern. Daher ist es wünschenswert, möglichst schnell und einfach die Länge bzw. Größe einer Parklücke vor einem vollständigen Vorbeifahren des Fahrzeuges zu vermessen.

Andererseits wird von einem Fahrer heutzutage im zunehmend dichten Stadtverkehr eine erhöhte Aufmerksamkeit verlangt, sodass es wünschenswert ist, eine unnötige Ablenkung des Fahrers durch ein System zur Parklückenvermessung zu vermeiden. Die Vermessung der Parklücke muss deshalb möglichst zeitgleich mit dem Vorbeifahren des Fahrzeuges erfolgen, und die resultierende Information muss dem Fahrer in einer solchen Weise zur Verfügung gestellt werden, dass er möglichst wenig vom eigentlichen Straßenverkehr abgelenkt wird.

Bei einem bekannten Parkhilfegerät gemäß der DE 196 16 447 C2 wird über spezifische Sensoren mit einer definierten vorderen und seitlichen Sensorfeldbegrenzung durch Erzeugen von einem ersten und einem zweiten Signal bei Erreichen der Begrenzung eines Erfassungsfeldes des Sensors die Länge der Parklücke beim Vorbeifahren des Fahrzeuges ermittelt. Durch die bekannte Strahlgeometrie der Sensoren bzw. deren Erfassungsgrenzen wird so durch Erfassen des vorderen und hinteren angrenzenden Fahrzeuges der Parklücke die Länge der Parklücke ermittelt. Nachteilig hierbei ist, dass zum einen die Strahlgeometrie der Sensoren des Systems bekannt sein muss, und zum anderen, dass die Sensoren in einer spezifischen Ausrichtung, das heißt Anordnung an dem Fahrzeug, vorgesehen sein müssen. Zum anderen ist hierbei nachteilig, dass die Anzeige einer gemessenen Länge einer Parklücke die Aufmerksamkeit des Fahrers von der Straße ablenkt, da dieser sich einer grafischen Anzeigeeinrichtung zuwenden muss.

Aus der DE 29 01 504 B1 ist ein System zum Vermessen einer Parklücke gemäß dem Oberbegriff des Anspruchs bekannt. Dieses System umfasst gemäß einer ersten Ausbildung einen an der rechten vorderen Ecke des Fahrzeugs angeordneten Abstandssensor, über den bei einer Vorbeifahrt des Fahrzeugs an der Parklücke deren Beginn und Ende erfasst werden können, sowie einen Wegsensor, um den zwischen Beginn und Ende der Parklücke bei der Vorbeifahrt zurückgelegten Fahrweg zu messen und daraus die Länge der Parklücke zu ermitteln. Wenn die Parklücke eine ausreichen de Länge für einen Einparkvorgang aufweist, erfolgt eine Anzeige.

Die vorliegende Erfindung hat zur Aufgabe, ein System zum Vermessen einer Parklücke für ein Kraftfahrzeug bereitzustellen, mittels welchem eine Vermessung der Parklücke in Echtzeit und beim Vorbeifahren an der Parklücke auf möglichst einfache Weise realisierbar ist, wobei dem Fahrer eine parklückenbezogene Information bereitgestellt werden soll, welche eine möglichst geringe Ablenkung des Fahrers von der Straße erfordert.

Diese Aufgabe wird mit den Merkmalen des Systems zur Vermessung einer Parklücke gemäß Anspruch 1 gelöst. Vorteilhafte Ausgestaltungen und Weiterbildungen sind Gegenstand der jeweiligen abhängigen Ansprüche.

Das System zum Vermessen einer Parklücke gemäß der Erfindung weist mindestens einen Entfernungssensor und mindestens einen Wegsensor auf zum Erfassen von Sensorwerten sowie eine Steuerung zum Verarbeiten dieser Sensorwerte, die mit einer Ausgabeeinheit verbunden ist. Die Sensorwerte sind zur Berechnung und Ausgabe von Informationen hinsichtlich der Parklückenlänge und des Schwierigkeitsgrades durch die Steuerung verarbeitbar und mit der Ausgabeeinheit ist eine kombinierte grafische und akustische Ausgabe erzeugbar. Durch die kombinierte und unmittelbare Ausgabe der parklückenbezogenen Informationen auf einerseits akustische und andererseits auf grafische Art ist die Ablenkung des Fahrers durch das System reduziert. Beispielsweise erhält der Fahrer bei Vorhandensein einer ausreichend großen Parklücke noch im Vorbeifahren ein akustisches Signal, und gleichzeitig wird eine optische Anzeige der Parklückengröße und/oder des Schwierigkeitsgrades für ein Einparken bereitgestellt. Hierdurch kann sich der Fahrer zunächst auf das akustische Signal verlassen und den Bremsvorgang im fließenden Verkehr ohne eine Gefährdung einleiten. Er muss nicht seine Aufmerksamkeit von der Straße auf eine grafische Anzeige des Systems konzentrieren, wie es bei bisher bekannten Systemen der Fall war. Diese letztere kann er nach erfolgtem Abbremsen und Stoppen des Fahrzeuges für weitere Detailinformationen hinsichtlich der Parklückengröße zu Rate ziehen. Dadurch, dass erfindungsgemäß je mindestens ein Entfernungssensor und ein Wegsensor vorgesehen sind, kann auf einfache Weise auch mit bestehenden Systemen, zum Beispiel einem Einparkhilfesystem, die Vermessung einer Parklücke erfolgen. Durch den Entfernungssensor, der beispielsweise im vorderen Bereich an der Seite des Fahrzeuges angeordnet ist, können der Beginn und das Ende der Parklücke erfasst werden, wobei schon vor Erreichen des Endes dem System die notwendige Information über die Länge der Parklücke bereitgestellt wird, da zeitgleich mit dem Wegsensor die Länge der zurückgelegten Strecke gemessen und mit dem Entfernungssensorwert zusammengeführt wird. Es erfolgt erfindungsgemäß eine Verknüpfung der Sensorwerte. Hierdurch kann auch schon vor Erreichen des Endes der Parklücke dem Fahrer beispielsweise durch einen Warnton die Information gegeben werden, dass die Parklücke ausreichend ist oder nicht. Die genaue Größe und der damit verbundene Schwierigkeitsgrad beim Einparken kann anschließend nach Abbremsen des Fahrzeuges durch eine optische Anzeige von dem Fahrer festgestellt werden. Eine zweistufige Informationsabfrage und -verarbeitung wird ermöglicht.

Gemäß der Erfindung ist in der Steuerung ein Algorithmus vorhanden, mit welchem aus den Sensorwerten des Entfernungssensors und des Wegsensors eine Ausgabe der Parklückenvermessung in Echtzeit berechenbar ist noch vor Erreichen des Parklückenendes. Durch einfaches Hinterlegen eines spezifischen Algorithmus in der Steuerung, welche beispielsweise auch die Steuerung eines ohnehin vorhandenen Nahbereichüberwachungssystems sein kann, kann so die erfindungsgemäße Parklückenvermessung auf denkbar einfache Weise implementiert werden. Dadurch, dass eine Berechnung einer parklückenbezogenen Ausgabe in Echtzeit mit dem Algorithmus möglich ist, kann ohne Verzögerung ein Resultat hinsichtlich der Bewertung einer Parklücke in qualitativer wie auch in quantitativer Hinsicht bereitgestellt werden. Zum Beispiel kann dem Fahrer nicht nur die ausreichende Größe unter Vergleich mit einer gespeicherten Fahrzeuglänge signalisiert werden, sondern es kann auch der Schwierigkeitsgrad für ein Einparken abhängig von der Größe der Parklücke auf akustischem oder grafischem Wege dem Fahrer signalisiert werden.

Nach einer weiteren vorteilhaften Ausgestaltung der Erfindung ist der Wegsensor ein Sensor zum Erfassen eines Tacho-Signals, eines Antiblockiersystem-Signals oder eines Getriebesignals des Kraftfahrzeuges. Die im Fahrzeug ohnehin vorhandene Wegmessung über einen derartigen Sensor kann so vorteilhafterweise bei dem Vermessen einer Parklücke verwendet werden, ohne dass zusätzlich ein Sensor eingebaut werden muss.

Nach einer weiteren vorteilhaften Ausgestaltung der Erfindung ist der Entfernungssensor ein Ultraschallsensor, ein Infrarotsensor oder ein Radarsensor. Die Anordnung und Ausrichtung des Sensors oder der Mehrzahl von Sensoren ist dabei so, dass möglichst am vorderen Bereich des Fahrzeuges eine seitlich, das heißt bei Rechtsverkehr auf der rechten Seite des Fahrzeugs, sich befindende Parklücke durch Aussenden und Empfangen von Sensorsignalen abtastbar ist. Gemäß einem diesbezüglichen Merkmal kann der Entfernungssensor mit einem reduzierten Erfassungsbereich versehen sein, das heißt einen spezifischen, schmalen Erfassungswinkel aufweisen. Hierdurch wird die Genauigkeit bei der Bestimmung des Beginns und des Endes einer Parklücke vergrößert.

Nach einer weiteren vorteilhaften Ausgestaltung der Erfindung umfasst die grafische Ausgabe eine quantitative, detaillierte Information über die Länge und die Größe der Parklücke, und die akustische Ausgabe umfasst einen Warnton, welcher bei Überschreiten eines gespeicherten, minimalen Parklückenwertes noch im Vorbeifahren erzeugbar ist. Hierdurch erhält der Fahrer nicht nur die quantitative Information, ob eine Parklücke ausreichend groß ist, sondern ebenso qualitative Aussagen hinsichtlich des Schwierigkeitsgrades oder Ähnlichem. Diese zweistufige Aufteilung der Informationsbereitstellung für den Fahrer hat den Vorteil, dass zunächst über ein kurzes Signal ihm eine ausreichende Größe der Parklücke signalisiert werden kann und er trotzdem anschließend, sobald das Fahrzeug zum Stillstand gekommen ist, die genaueren Informationen an einer optischen Ausgabe abfragen kann. Die Sicherheit und Effizienz des Systems in der Benutzung insbesondere in starkem Stadtverkehr wird somit erhöht.

Nach einer weiteren vorteilhaften Ausgestaltung der Erfindung weist die Ausgabeeinheit ein Anzeigegeräte mit einem Bildschirm und eine Tonerzeugungseinrichtung auf. Der Bildschirm kann beispielsweise eine LED-Anzeige oder ein Flüssigkristall-Display sein. Die Tonerzeugungseinrichtung zum Wiedergeben von akustischen Ausgaben kann beispielsweise eine separate Einrichtung mit einem Lautsprecher und einem Tonerzeugungsmodul sein oder sie kann durch bestehende Einrichtungen, wie zum Beispiel die Musikanlage des Fahrzeugs, realisiert sein.

Nach einer weiteren vorteilhaften Ausgestaltung der Erfindung umfasst die akustische Ausgabe einen punktuellen, wiederholten kurzen Warnton, der bei Aktivieren des Systems erzeugt wird, und einen Dauerwarnton, der bei Erfassen einer Parklücke, die größer als ein gespeicherter Wert ist, erzeugt wird. Hierdurch erhält der Fahrer die Information, dass das System aktiviert ist auf akustischem Wege, und weiß, dass ab dem langen Warnton der Bremsvorgang eingeleitet werden kann. Erfolgt kein Erzeugen eines langen Warntons, weiß der Fahrer unmittelbar noch vor einem Abbremsen, dass er eine andere Parklücke für sein Fahrzeug suchen muss.

Nach einer weiteren vorteilhaften Ausgestaltung der Erfindung umfasst die grafische Ausgabe eine Darstellung der Parklückengröße im Verhältnis zum Fahrzeug und/oder eine qualitative Darstellung des Schwierigkeitsgrades zum Einparken. Letztere kann beispielsweise durch eine farbliche Abstufung zwischen grün, gelb und rot oder aber durch eine graduelle Textausgabe, wie beispielsweise "leicht", "mittel" oder/und "schwer" erfolgen. Die genaue Größe hilft dem Fahrer hierbei, auf einen Blick zu erkennen, ob und in welcher Weise die Lücke für das Fahrzeug ausreichend sein wird. Hierdurch sind dem Fahrer genaueste Detailinformationen bei der Parklückenvermessung zur Verfügung gestellt.

Nach einer weiteren vorteilhaften Ausgestaltung der Erfindung sind der Entfernungssensor und die Steuerung Bestandteil eines im Fahrzeug vorhandenen Nahbereichüberwachungssystems. Vorzugsweise ist die Parklückenvermessung in einem ohnehin bestehenden so genannten "Einparkhilfesystem" mit an der Vorder- und den seitlichen Seiten des Fahrzeugs vorgesehenen Sensoren implementiert. Hierdurch sind die zusätzlichen Kosten und der Mehraufwand bei der Herstellung des Systems reduziert.

Nach einer weiteren vorteilhaften Ausgestaltung der Erfindung ist der Entfernungssensor im vorderen Bereich des Fahrzeuges angeordnet und mit einem seitlich begrenzten, spezifisch ausgerichteten Erfassungsbereich versehen. Hierdurch kann die Genauigkeit bei der Parklückenvermessung vergrößert werden, indem die Bestimmung der genauen Lage einer Parklücke durch einen somit begrenzten Sensorerfassungsbereich noch genauer festgestellt werden kann.

Weitere Merkmale, vorteilhafte Ausgestaltungen und Einzelheiten der Erfindung sind der nachfolgenden Beschreibung zu entnehmen, in welcher die Erfindung anhand eines in der beigefügten Zeichnung dargestellten Ausführungsbeispiels näher beschrieben und erläutert ist.

In der Zeichnung zeigen:
- Figur 1: eine schematische Darstellung eines Ausführungsbeispiels der Erfindung in Form eines Blockdiagramms ;
- Figur 2: eine Darstellung der Funktionsweise einer Parklückenvermessung des Ausführungsbeispiels gemäß Figur 1 in einer Draufsicht.

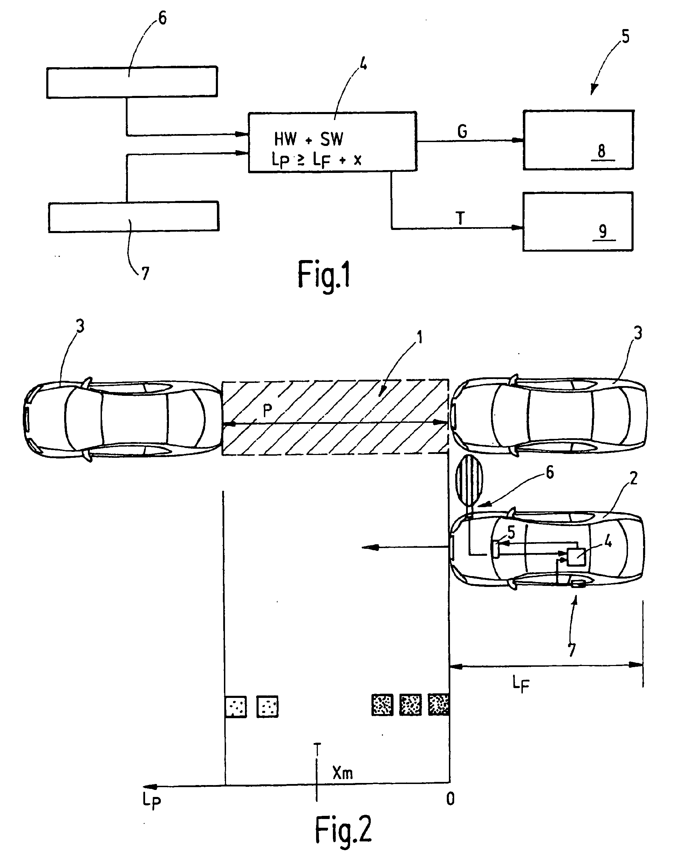

In Figur 1 sind die Komponenten eines Ausführungsbeispiels eines erfindungsgemäßen Systems zur Parklückenvermessung in Form eines Blockdiagramms dargestellt. Eine Parklücke wird durch mindestens einen Entfernungssensor 6 und einen Wegsensor 7 vermessen, indem beim Vorbeifahren des Fahrzeuges der Beginn einer Parklücke mit dem Entfernungssensor ermittelt und über den Wegsensor fortlaufend und unter Berechnung der jeweiligen zurückgelegten Strecke in einer Steuerung 4 zusammengeführt wird. Die Steuerung 4 kombiniert die gemessenen Werte (Parklückenbeginn über Entfernungssensor 6 und Streckenlänge über Wegsensor 7) über einen spezifischen Algorithmus und ermittelt in Echtzeit die zurückgelegte Strecke seit dem Beginn der Parklücke. Durch einen Vergleich, beispielsweise der gespeicherten Mindestlänge für einen spezifischen Fahrzeugtyp, mit der so gemessenen Länge einer Parklücke, kann schon auf etwa halber Höhe der Parklücke mittels des Systems festgestellt werden, ob diese für ein Einparken ausreichend ist.

Die Steuerung 4 führt somit die beiden Sensorwerte des Entfernungssensors 6 und des Wegsensors 7 zusammen und berechnet unmittelbar und vorzugsweise in Echtzeit den vorhandenen Parkraum. Dies ist durch die Relation L_{P} > = L_{F} + x beispielhaft in Fig. 1 dargestellt. Der Faktor x steht für die zum Fahrzeug zusätzlich erforderliche Länge für ein Einparken in die Lücke. Die Steuerung 4 ist angepasst, aus diesen beiden Werten sodann jeweils eine grafische Ausgabe 8 und eine akustische Ausgabe 9 einer Ausgabeeinheit 5 zuzuführen. Die akustische Ausgabe 9 ist beispielsweise ein Warnton T, welcher dem Fahrer mitteilt, dass die Größe der Parklücke ausreichend für sein Fahrzeug ist. Die grafische Ausgabe 8 ist beispielsweise eine grafische Wiedergabe der Parklücke P mit eingezeichnetem Grundriss des Fahrzeuges 2 des Benutzers. Zusätzlich oder alternativ kann die grafische Ausgabe die Abmessungen der Parklücke enthalten und/oder eine farbliche oder anderweitige Illustrierung eines Schwierigkeitsgrades beim Einparken. Diese kann beispielsweise durch farbliche Balken-Leuchtdioden mit einer Grün-gelb-rot-Abstufung oder durch textliche Wiedergabe des Schwierigkeitsgrades erfolgen.

In Figur 2 ist dieses Ausführungsbeispiel des erfindungsgemäßen Systems in der Anwendung und in seiner Funktionsweise schematisch verdeutlicht. Zwei parkende Fahrzeuge 3 bilden zwischen sich einen Freiraum, welcher eine Parklücke 1 begrenzt mit einer gegebenen Länge P. Das längs der parkenden Fahrzeuge 3 herannahende Fahrzeug 2, welches mit dem erfindungsgemäßen System für Parklückenvermessung ausgestattet ist, weist an seiner vorderen rechten Seite einen Entfernungssensor 6 auf mit einem in Richtung auf die seitlich parkenden Fahrzeuge 3 gerichteten Erfassungsbereich. Das fahrende Fahrzeug 2 (Fahrtrichtung mit Pfeil in Figur 2 gekennzeichnet) weist darüber hinaus einen Wegsensor 7 auf, welcher beispielsweise ein getriebe- oder tachoabhängiger Sensor ist, der die zurückgelegte Wegstrecke genau bestimmen lässt. Die beiden von dem Entfernungssensor 6 und dem Wegsensor 7 erfassten Werte werden einer Steuerung 4 im Inneren des Fahrzeuges zugeführt. Nach Erreichen des Beginns der Parklücke 1 wird ein erster Signalwert durch den Entfernungssensor 6 erzeugt. Gleichzeitig wird durch die Steuerung 4 die Erfassung der Wegstrecke mit dem Wegsensor 7 begonnen und fortlaufend, das heißt in wesentlichen in Echtzeit, wird eine Berechnung in der Steuerung 4 vorgenommen, zum Ermitteln der Länge der Parklücke 1 beim Vorbeifahren des Fahrzeuges. Noch vor einem vollständigen Vorbeifahren des Fahrzeuges 2 an der Parklücke 1 wird durch das erfindungsgemäße System sodann ein Warnton T erzeugt, welcher dem Fahrer anzeigt, dass die Parklücke 1 eine ausreichende Parklückenlänge P aufweist, damit das Fahrzeug mit der Länge L_{F} ohne Schwierigkeiten in dieselbe eingeparkt werden kann. Die akustische Warnsignalausgabe T kann über den gesamten Messvorgang durch kurze wiederholte Warnsignale begleitet werden, sodass der Fahrer weiß, dass das System aktiviert ist. Gleichzeitig wird eine grafische Ausgabe mit der Ausgabeeinheit 5 erzeugt, die beispielsweise fortlaufend eine Längenrelation mit Balken-Darstellungen oder in Form von Parklücken-/Fahrzeugdraufsichten einen Vergleich von Fahrzeuglänge mit der gegebenen Parklückenlänge P ermöglicht.

Dies hat den Vorteil, dass der Fahrer fast in Echtzeit und unmittelbar eine Information hinsichtlich der Parklückengröße auf akustischem Wege gleichermaßen bereitgestellt bekommt ebenso wie die quantitativen, detaillierten Aussagen, welche über die grafische Darstellbarkeit in der Ausgabeeinheit dem Fahrer detaillierte Informationen geben. Die Aufmerksamkeit des Fahrers muss somit beim Vermessen der Parklücke zunächst nicht von der Straße und dem Verkehr abgewendet werden.

Sämtliche in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1: Parklücke
- 2: Kfz
- 3: Geparkte Fahrzeuge
- 4: Steuerung
- 5: Ausgabeeinheit
- 6: Entfernungssensor
- 7: Wegsensor
- 8: Grafische Ausgabe
- 9: Akustische Ausgabe

- P: Länge der Parklücke
- L_{F}: Länge des Fahrzeuges
- L_{P}: Länge der zum Einparken erforderlichen Parklücke (gespeicherter Wert)
- G: Grafische Ausgabe
- T: Akustische Ausgabe (Warnton)

## Patentansprüche

1. System zum Vermessen einer Parklücke (1) für ein Kraftfahrzeug (2), insbesondere einen Personenkraftwagen, beim Vorbeifahren längs einer Reihe von Fahrzeugen (3) mit Sensoren zur Erfassung von Sensorwerten und mit einer Steuerung (4) zum Verarbeiten der Sensorwerte, die mit einer Ausgabeeinheit (5) verbunden ist, um dem Fahrer eine parklückenbezogene Information bereitzustellen, wobei die Sensoren mindestens einen Entfernungssensor (6), um beim Vorbeifahren des Fahrzeuges den Beginn der Parklücke zu erfassen, und mindestens einen Wegsensor (7) umfassen um die seit dem Beginn der Parklücke zurückgelegte Strecke zu erfassen, deren Sensorwerte zur Berechnung und Ausgabe von Informationen hinsichtlich der Lückenlänge und des Schwierigkeitsgrades des Einparkvorgangs durch die Steuerung (4) verarbeitbar sind und wobei mit der Ausgabeeinheit (5) eine kombinierte grafische (8) und akustische (9) Ausgabe hieraus erzeugbar ist, **dadurch gekennzeichnet, dass** die Steuerung (4) dazu ausgebildet ist, beim Vorbeifahren des Fahrzeugs nach Erreichen des Beginns der Parklücke fortlaufend und in Echtzeit die zurückgelegte Strecke seit dem Beginn der Parklücke zu ermitteln und die so gemessene Länge der Parklücke mit einer gespeicherten Mindestlänge für den spezifischen Fahrzeugtyp zu vergleichen, um festzustellen, ob diese für ein Einparken ausreichend ist.

2. System nach Anspruch 1, **dadurch gekennzeichnet, dass** der Wegsensor (7) ein Sensor zum Erfassen eines Tacho-Signals, eines Antiblockiersystem-Signals oder eines Getriebesignals des Kraftfahrzeuges ist.

3. System nach einem der vorhergehenden Ansprüche,
**dadurch gekennzeichnet, dass** der Entfernungssensor (6) ein Ultraschallsensor, ein Infrarotsensor oder ein Radarsensor ist.

4. System nach einem der vorhergehenden Ansprüche,
**dadurch gekennzeichnet, dass** die grafische Ausgabe (8) eine quantitative, detaillierte Information über die Länge und die Größe der Parklücke (1) umfasst und die akustische Ausgabe (9) einen Warnton umfasst, welcher bei Überschreiten eines gespeicherten, minimalen Parklückenwertes noch im Vorbeifahren des Fahrzeuges (2) erzeugbar ist.

5. System nach einem der vorhergehenden Ansprüche,
**dadurch gekennzeichnet, dass** die Ausgabeeinheit (5) ein Anzeigegerät mit einem Bildschirm sowie eine Tonerzeugungseinrichtung aufweist.

6. System nach einem der vorhergehenden Ansprüche,
**dadurch gekennzeichnet, dass** die akustische Ausgabe (9) einen punktuellen, wiederholten kurzen Warnton umfasst bei Aktivieren des Systems und einen langen Warnton bei einer Parklücke (1), die größer ist als ein gespeicherter Parklückenwert.

7. System nach einem der vorhergehenden Ansprüche,
**dadurch gekennzeichnet, dass** die grafische Ausgabe (8) eine Darstellung der Parklückengröße im Verhältnis zum Fahrzeug umfasst und/oder eine qualitative Darstellung des Schwierigkeitsgrades für ein Einparken in die Parklücke (1).

8. System nach einem der vorhergehenden Ansprüche,
**dadurch gekennzeichnet, dass** der Entfernungssensor (6) und die Steuerung (4) Bestandteil eines im Fahrzeug vorhandenen Nahbereichüberwachungssystems, insbesondere eines Einparkhilfesystems, sind.

9. System nach einem der vorhergehenden Ansprüche,
**dadurch gekennzeichnet, dass** der Entfernungssensor (6) im vorderen Bereich des Fahrzeuges angeordnet ist und einen seitlich begrenzten, spezifisch ausgerichteten Erfassungsbereich aufweist.

## Claims

1. System for measuring a parking space (1) for a motor vehicle (2), in particular a passenger car, when travelling along past a row of vehicles (3), having sensors for sensing sensor values and having a controller (4) for processing the sensor values, which controller (4) is connected to an output unit (5) in order to provide the driver with information relating to parking spaces, wherein the sensors comprise at least one distance sensor (6) for sensing the start of the parking space as the vehicle travels past, and having at least one travel sensor (7) for sensing the distance travelled since the start of the parking space, the sensor values of which sensors can be processed by the controller (4) in order to calculate and output information relating to the length of the space and the degree of difficulty of the parking process, and wherein the output unit (5) can be used to generate a combined graphic output (8) and acoustic output (9) from said information, **characterized in that** the controller (4) is designed to determine, after the start of the parking space has been reached, continuously and in real time the distance travelled since the start of the parking space the vehicle travels past, and to compare the measured length of the parking space with a stored minimum length for the specific type of vehicle in order to determine whether said minimum length is sufficient for parking.

2. System according to Claim 1, **characterized in that** the travel sensor (7) is a sensor for sensing a tachometer signal, an anti-lock braking system signal or a transmission signal of the motor vehicle.

3. System according to one of the preceding claims, **characterized in that** the distance sensor (6) is an ultrasonic sound sensor, an infrared sensor or a radar sensor.

4. System according to one of the preceding claims, **characterized in that** the graphic output (8) comprises a quantitative, detailed information item about the length and the size of the parking space (1), and the acoustic output (9) comprises a warning tone which can be generated while the vehicle (2) is still travelling past, when a stored minimum parking space value is exceeded.

5. System according to one of the preceding claims, **characterized in that** the output unit (5) has a display unit with a screen and a tone-generating device.

6. System according to one of the preceding claims, **characterized in that** the acoustic output (9) comprises a punctual, repeated brief warning tone when the system is activated, and a long warning tone in the case of a parking space (1) which is larger than a stored parking space value.

7. System according to one of the preceding claims, **characterized in that** the graphic output (8) comprises a representation of the size of the parking space in relation to the vehicle, and/or a qualitative representation of the degree of difficulty of parking in the parking space (1).

8. System according to one of the preceding claims, **characterized in that** the distance sensor (6) and the controller (4) are components of a close-range-monitoring system, in particular of a parking aid, present in the vehicle.

9. System according to one of the preceding claims, **characterized in that** the distance sensor (6) is arranged in the front part of the vehicle and has a laterally limited, specifically orientated sensing range.

## Revendications

1. Système pour mesurer une place de stationnement (1) pour un véhicule automobile (2), notamment un véhicule de tourisme, lors du passage le long d'une rangée de véhicules (3), comprenant des capteurs pour détecter des valeurs de détection et une commande (4) pour traiter les valeurs de détection, laquelle est reliée à une unité de sortie (5), afin de fournir au conducteur une information en rapport avec la place de stationnement, les capteurs incluant au moins un capteur de distance (6) pour détecter le début de la place de stationnement lors du passage du véhicule et au moins un capteur de trajet (7) pour détecter le trajet parcouru depuis le début de la place de stationnement, dont les valeurs de détection peuvent être traitées par la commande (4) en vue de calculer et de délivrer des informations concernant la longueur de la place de stationnement et le degré de difficulté de la manoeuvre de stationnement, et une diffusion combinée graphique (8) et sonore (9) pouvant être générée à partir de ces informations avec l'unité de sortie (5), **caractérisé en ce que** la commande (4) est configurée, lors du passage du véhicule après avoir atteint le début de la place de stationnement, pour déterminer continuellement et en temps réel le trajet parcouru depuis le début de la place de stationnement et comparer la longueur ainsi mesurée de la place de stationnement avec une longueur minimale mémorisée pour le type de véhicule spécifique afin de déterminer si celle-ci est suffisante pour le stationnement.

2. Système selon la revendication 1, **caractérisé en ce que** le capteur de trajet (7) est un capteur destiné à détecter un signal tachymétrique, un signal de système antiblocage ou un signal de boîte de vitesses du véhicule automobile.

3. Système selon l'une des revendications précédentes, **caractérisé en ce que** le capteur de distance (6) est un capteur à ultrasons, un capteur à infrarouges ou un capteur radar.

4. Système selon l'une des revendications précédentes, **caractérisé en ce que** la diffusion graphique (8) comprend une information quantitative détaillée sur la longueur et la taille de la place de stationnement (1) et la diffusion sonore (9) comprend un signal sonore d'avertissement qui peut être généré en cas de dépassement d'une valeur minimale de place de stationnement mémorisée même lors du passage du véhicule (2).

5. Système selon l'une des revendications précédentes, **caractérisé en ce que** l'unité de sortie (5) présente un module indicateur avec un écran ainsi qu'un dispositif générateur de signal sonore.

6. Système selon l'une des revendications précédentes, **caractérisé en ce que** la diffusion sonore (9) comprend un signal sonore d'avertissement court, ponctuel et répété lors de l'activation du système et un signal sonore d'avertissement long en présence d'une place de stationnement (1) qui est plus grande qu'une valeur de place de stationnement mémorisée.

7. Système selon l'une des revendications précédentes, **caractérisé en ce que** la diffusion graphique (8) comprend une représentation de la taille de la place de stationnement par rapport au véhicule et/ou une représentation qualitative du degré de difficulté pour se garer sur la place de stationnement (1).

8. Système selon l'une des revendications précédentes, **caractérisé en ce que** le capteur de distance (6) et la commande (4) font partie d'un système de surveillance de la zone de proximité présent dans le véhicule, notamment d'un système d'aide au stationnement.

9. Système selon l'une des revendications précédentes, **caractérisé en ce que** le capteur de distance (6) est disposé dans la zone avant du véhicule et présente une plage de détection à orientation spécifique délimitée latéralement.
